# EUROPÄISCHE PATENTSCHRIFT

(11) **EP 3 987 935 B1**
(45) Veröffentlichungstag und Bekanntmachung des Hinweises auf die Patenterteilung: **16.08.2023**
(21) Anmeldenummer: 20202963.3
(22) Anmeldetag: 21.10.2020
(51) Int. Cl.: A21C 3/02

(54) **VORRICHTUNG ZUM BEARBEITEN VON TEIG**
DEVICE FOR PROCESSING DOUGH
DISPOSITIF DE TRAITEMENT DE PÂTE

(43) Veröffentlichungstag der Anmeldung: 27.04.2022
(73) Patentinhaber: Fritsch Bakery Technologies GmbH & Co. KG, 97348 Markt Einersheim (DE)
(72) Erfinder: DORNER, Fred, 97318 Kitzingen (DE); GROHMANN, Thomas, 97342 Seinsheim (DE); HOFMANN, Julian, 97353 Wiesentheid (DE)
(74) Vertreter: Grünecker Patent- und Rechtsanwälte PartG mbB

(56) Entgegenhaltungen:
- EP-A1- 0 211 669
- EP-A2- 0 128 015
- EP-A2- 0 953 287
- EP-A2- 1 449 437
- US-A1- 2002 110 611

## Beschreibung

Die Erfindung bezieht sich auf Vorrichtungen zum Bearbeiten und Fördern von Teig.

Es sind Vorrichtungen zum Bearbeiten und Fördern von Teig aus dem Stand der Technik, beispielsweise der DE 102 42 576 A1, bekannt. Dort wird der Teig durch ein Förderband zu einer Kombination aus Satellitenwalzen und einer Gegenwalze gefördert und durch diese ausgewalzt. Da diese Vorrichtungen Teig, d. h. ein Lebensmittel, bearbeiten, müssen sie regelmäßig und gründlich gereinigt werden. Dazu kann es erforderlich sein, die Spannung des Förderbandes zu reduzieren. Bspw. aus der DE 10 2018 204 043 A1 ist es bekannt, das Förderband durch einen schwenkbaren Träger zu führen und durch Schwenken des Trägers die Spannung des Förderbandes zu reduzieren.

EP 0128015 A2 und US 2002/110611 A1 offenbaren weitere Vorrichtungen zum Bearbeiten von Teig.

Ein einfaches Schwenken um eine Schwenkachse, wie in der DE 10 2018 204 043 A1 offenbart, kann jedoch bei manchen Verarbeitungsvorrichtungen, insbesondere bei solchen mit großen Satellitenwalzenanordnungen, dazu führen, dass weitere Komponenten der Verarbeitungsvorrichtung, z. B. die Satellitenwalze, aus der Schwenkbahn des schwenkenden Trägers entfernt werden müssen, da der Letztere sonst mit diesen Komponenten kollidieren würde. Dies kann den Reinigungsvorgang verzögern. Außerdem kann dadurch das Risiko einer Beschädigung während des Reinigungsvorgangs vergrößert werden, bspw., wenn das in der Regel technisch wenig geschulte Reinigungspersonal das Schwenken und das Entfernen der Komponente in der falschen Reihenfolge vornimmt und es folglich doch zu einer Kollision kommt.

Es daher eine Aufgabe der Erfindung, eine verbesserte Vorrichtung zum Bearbeiten und Fördern von Teig anzugeben, die eine schnellere und dadurch effizientere Reinigung ermöglicht, ohne das Risiko von Beschädigungen zu erhöhen.

Diese Aufgabe wird erfindungsgemäß gelöst durch eine Vorrichtung mit den Merkmalen des Anspruchs 1. Vorteilhafte Weiterbildungen sind in den abhängigen Ansprüchen angegeben.

Die Erfindung sieht eine Vorrichtung zum Bearbeiten von Teig vor, mit einem Gestell, einer Bandfördervorrichtung, die zum Fördern eines vorzugsweise bandförmigen Teigstrangs konfiguriert ist, und einer Bearbeitungsstation, die zum Bearbeiten des Teigstrangs konfiguriert und stromabwärts der Bandfördervorrichtung angeordnet ist. Die Bandfördervorrichtung umfasst einen Führungstisch, der zwischen einer Betriebsposition und einer Reinigungsposition schwenkbar ist. Der Führungstisch ist dazu konfiguriert, ein Förderband der Bandfördervorrichtung auf einer der Bearbeitungsstation zugewandten Seite der Bandfördervorrichtung zu führen, wobei der Führungstisch durch zwei Hebelarme mit dem Gestell verbunden ist, die jeweils sowohl mit dem Gestell als auch mit dem Führungstisch schwenkbar verbunden sind.

Durch das Vorsehen von zwei Hebelarmen kann die Schwenkbewegung des Führungstisches besser an die Gegebenheiten angepasst werden. Wenn z. B. ein Abschnitt des Führungstisches in Bereiche der Bearbeitungsstation hineinragt, aus denen er nur durch eine bestimmte Bewegung herausgeschwenkt werden kann, kann dies durch die zwei Hebelarme besser erreichbar sein. Insbesondere ist es auf diese Art einfacher, Kollisionen mit Komponenten der Bearbeitungsstation sicher zu verhindern, ohne dass diese Komponenten bewegt oder demontiert werden müssen.

Die Hebelarme können insbesondere in einer Produktionsrichtung und/oder Förderrichtung der Vorrichtung beabstandet sein. Alternativ oder zusätzlich können die Schwenkachsen der Hebelarme, an denen sie jeweils schwenkbar mit dem Gestell verbunden sind, unterschiedlich, insbesondere voneinander beabstandet sein. Alternativ oder zusätzlich können die Schwenkachsen der Hebelarme, an denen sie jeweils schwenkbar mit dem Führungstisch verbunden sind, unterschiedlich, insbesondere voneinander beabstandet, sein.

Das Gestell kann ein tragendes Element der Vorrichtung sein. Insbesondere kann es ein tragendes Element der Bandfördervorrichtung sein. Alternativ oder zusätzlich kann das Gestell ein tragendes Element der Bearbeitungsstation sein. Besonders günstig kann es sein, wenn das Gestell sowohl die Bearbeitungsstation als auch die Bandfördervorrichtung stützt und/oder trägt.

Als Bearbeitungsstation können Vorrichtungen zum Bearbeiten eines Teigstranges angesehen werden. Diese können konstruktiv mit der Bandfördervorrichtung verbunden sein oder unabhängig von der Bandfördervorrichtung, d. h. nicht konstruktiv mit dieser verbunden, sein. In letzterem Fall kann die Bandfördervorrichtung lediglich zum Anliefern des Teigstranges an die Bearbeitungsstation konfiguriert sein. Beispielsweise können in diesem Fall sowohl die Bandfördervorrichtung als auch die Bearbeitungsstation ein eigenes Gestell aufweisen. Bei einer konstruktiv mit der Bandfördervorrichtung verbundenen Bearbeitungsstation können sich die beiden Komponenten z. B. ein Gestell teilen, d. h., dass die Bearbeitungsstation durch das Gestell der Bandfördervorrichtung gestützt sein kann oder umgekehrt.

Die Bearbeitungsstation kann z. B. eine Walzvorrichtung enthalten, die zum Walzen des Teigstrangs konfiguriert sein kann. Sie kann alternativ oder zusätzlich eine Trennvorrichtung enthalten, die zum Trennen des Teigstrangs konfiguriert sein kann. Alternativ oder zusätzlich kann die Bearbeitungsstation eine Wickelvorrichtung enthalten, die zum Wickeln des Teigstrangs und/oder zum Wickeln von aus dem Teigstrang geschnittenen Teigstücken konfiguriert sein kann.

Alternativ oder zusätzlich kann die Bearbeitungsstation eine Laminiervorrichtung enthalten, die zum Einziehen von Fett in den Teigstrang konfiguriert sein kann. Alternativ oder zusätzlich kann die Bearbeitungsstation eine Berieselungsvorrichtung aufweisen, die zum Berieseln des Teigstrangs bzw. Teilen davon konfiguriert sein kann.

Der Führungstisch kann insbesondere relativ zu dem Gestell schwenkbar sein. Er kann alternativ oder zusätzlich relativ zu der Bearbeitungsstation schwenkbar sein. Dabei kann der Führungstisch um mehrere Achsen gleichzeitig schwenken, insbesondere an den schwenkbaren Verbindungen zu den Hebelarmen. Aus diesen Schwenkbewegungen um mehrere Achsen kann eine Schwenkbewegung des Führungstisches resultieren, die nicht notwendigerweise eine Kreisbahn um eine statische Achse beschreibt. Dementsprechend ist Schwenken, wie es im Folgenden mit Bezug auf die Erfindung verwendet wird, nicht ausschließlich auf eine Bewegung auf einer Kreisbahn beschränkt.

Es kann vorteilhaft sein, wenn die Hebelarme unterschiedliche Längen aufweisen. So können bspw. die Position des Führungstisches und/oder dessen Neigung durch das Schwenken noch flexibler angepasst werden. Dadurch kann die Zugänglichkeit zu reinigender Bereiche weiter verbessert werden.

Es ist denkbar, dass ein erster der beiden Hebelarme weiter von der Bearbeitungsstation entfernt angeordnet ist und eine geringere Länge aufweist als ein zweiter der beiden Hebelarme.

Es ist vorstellbar, dass ein erster der beiden Hebelarme weiter von der Bearbeitungsstation entfernt angeordnet ist als ein zweiter der beiden Hebelarme und der zweite der beiden Hebelarme lösbar mit dem Führungstisch verbunden ist. Dies kann zum einen eine Demontage der Vorrichtung vereinfachen. Zum anderen kann dadurch ein Klappen des Führungstisches entgegen der Produktionsrichtung der Vorrichtung ermöglicht werden, was bei Wartungs- und/oder Reparaturarbeiten hilfreich sein kann. Solche Arbeiten können nämlich weitergehenden Zugang zu Bereichen der Vorrichtung erfordern als die regelmäßige Reinigung.

Die Bearbeitungsstation kann eine Schutzabdeckung aufweisen, die dazu konfiguriert ist, in einer Schutzposition einen zu schützenden Bereich abzudecken, wobei der Führungstisch dazu konfiguriert ist, in der Reinigungsposition ein Anordnen der Schutzabdeckung in der Schutzposition zu blockieren. Eine Schutzabdeckung kann dazu konfiguriert sein, zu verhindern, dass Bedienpersonal während des Betriebs der Vorrichtung Zugriff auf Bereiche der Bearbeitungsstation hat, in denen Verletzungen erfolgen können. Solche Bereiche können als zu schützende Bereiche angesehen werden.

Schutzabdeckungen bzw. die Maschinen, an denen sie vorgesehen sind, sind häufig mit Vorrichtungen ausgestattet, die eine Abwesenheit und/oder einen geöffneten Zustand der Schutzabdeckung erkennen und den Betrieb der jeweiligen Maschine in einem solchen Fall unterbrechen können. Wenn der Führungstisch in der Reinigungsposition das Anordnen der Schutzabdeckung in der Schutzposition blockiert, kann der Betrieb der Vorrichtung dadurch unterbunden werden. Dies kann einerseits die Arbeitssicherheit erhöhen, da auch bei einem in die Reinigungsposition geschwenkten Führungstisch erhöhte Verletzungsgefahr bestünde, wenn der Betrieb nicht unterbrochen wäre. Andererseits ist keine weitere Erkennungsvorrichtung zur Erkennung der Reinigungsposition des Führungstisches erforderlich, um den Betrieb zu unterbrechen.

Vorteilhafterweise kann die Bearbeitungsstation eine Schutzabdeckung aufweisen, die dazu konfiguriert ist, in einer Schutzposition einen zu schützenden Bereich abzudecken und ein Schwenken des Führungstischs aus der Betriebsposition heraus zu blockieren. Ähnlich wie bereits weiter oben erläutert, kann dadurch die Arbeitssicherheit erhöht und/oder ggf. auf eine zusätzliche Erkennungsvorrichtung zur Erkennung der Reinigungsposition des Führungstisches verzichtet werden.

Es kann vorteilhaft sein, wenn die Vorrichtung einen Betätigungshebel umfasst, der dazu konfiguriert ist, durch seine Betätigung den Führungstisch zu schwenken. Dadurch kann das Schwenken des Führungstisches vereinfacht werden. Zum einen, weil das Reinigungspersonal nicht direkt den Führungstisch greifen muss, um diesen zu schwenken. Dadurch können auch engere Fugen zwischen dem Führungstisch und angrenzenden Strukturen vorgesehen werden. Zum anderen, weil durch eine entsprechend gewählte Länge des Hebels die Betätigungskraft reduziert werden kann. Zusätzlich kann ein Betätigungshebel die Sicherheit erhöhen, da eine Greifstelle des Hebels von Gefahrenstellen, bspw. Gelenken, in denen Gliedmaßen eingeklemmt werden könnten, entfernt vorgesehen werden kann.

Es ist denkbar, dass der Betätigungshebel unbeweglich, vorzugsweise einstückig, mit einem der Hebelarme verbunden ist. Dadurch kann eine Kraft und/oder ein Moment verlustarm auf einen der Hebelarme übertragen werden

Es ist besonders günstig, wenn der Betätigungshebel seitlich neben dem Förderband angeordnet ist. Dadurch kann verhindert werden, dass der Betätigungshebel die Bewegung des Förderbands und/oder der darauf geförderten Gegenstände beeinträchtigt. Außerdem kann auch diese Anordnung die Sicherheit erhöhen, da seitlich neben dem Förderband in der Regel weniger bewegliche Teile, von denen eine Verletzungsgefahr für das Bedienpersonal ausgehen kann, vorgesehen sind. Als seitlich neben dem Förderband angeordnet kann ein Betätigungshebel z. B. dann angesehen werden, wenn er in einer Richtung, die senkrecht zu der Förderrichtung des Förderbandes verläuft, von einem Rand des Förderbandes beabstandet ist.

Es ist vorstellbar, dass der Betätigungshebel dazu konfiguriert ist, in einer Ebene zu schwenken, die parallel zu einer Produktionsrichtung der Vorrichtung orientiert ist. Dadurch kann auch beim Schwenken des Betätigungshebels das Risiko einer Beeinträchtigung der Bewegung des Förderbandes und/oder der darauf geförderten Gegenstände reduziert werden. Ähnlich wie bei der seitlichen Anordnung des Betätigungshebels kann außerdem die Arbeitssicherheit erhöht werden. Diese Wirkungen können insbesondere dann noch verstärkt werden, wenn die genannte Ebene zusätzlich senkrecht zu einer Fläche des Förderbandes orientiert ist, auf der die geförderten Gegenstände aufliegen.

Die Erfindung bezieht sich auf eine Vorrichtung der vorstehend beschriebenen Art. Im Folgenden wird ein vorteilhaftes Ausführungsbeispiel anhand von Zeichnungen näher erläutert.
- Figur 1: zeigt eine perspektivische, schematische Ansicht einer Vorrichtung zum Bearbeiten von Teig, bei der verschiedene Teile, insbesondere Abdeckungen und Teile des Gestells, zur besseren Übersicht nicht dargestellt sind.
- Figur 2: zeigt eine schematische Seitenansicht der Vorrichtung aus Figur 1, wobei zusätzlich eine Schutzabdeckung sowie ein Förderband mit darauf transportiertem Teigstrang gezeigt sind.
- Figur 3: zeigt eine schematische Seitenansicht, ähnlich Figur 2, wobei ein Führungstisch in einer Reinigungsposition dargestellt ist.
- Figur 4: zeigt eine schematische Seitenansicht, ähnlich den Figuren 2 und 3, wobei der Führungstisch in einer Wartungsposition dargestellt ist.

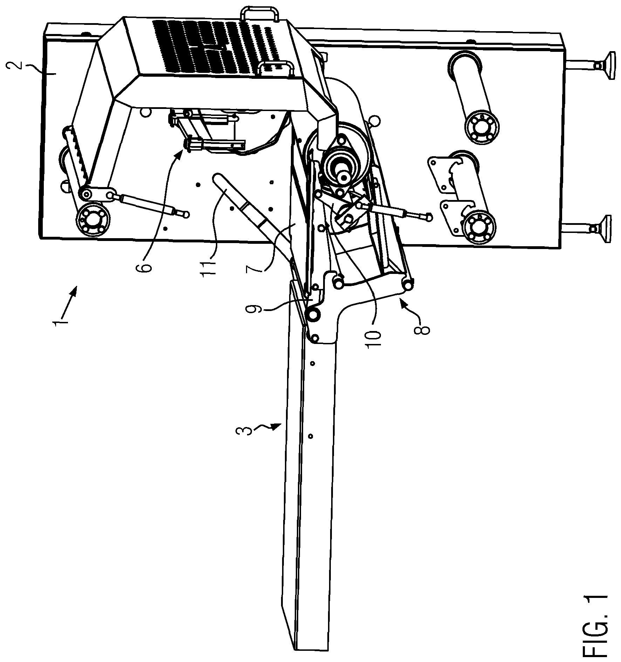

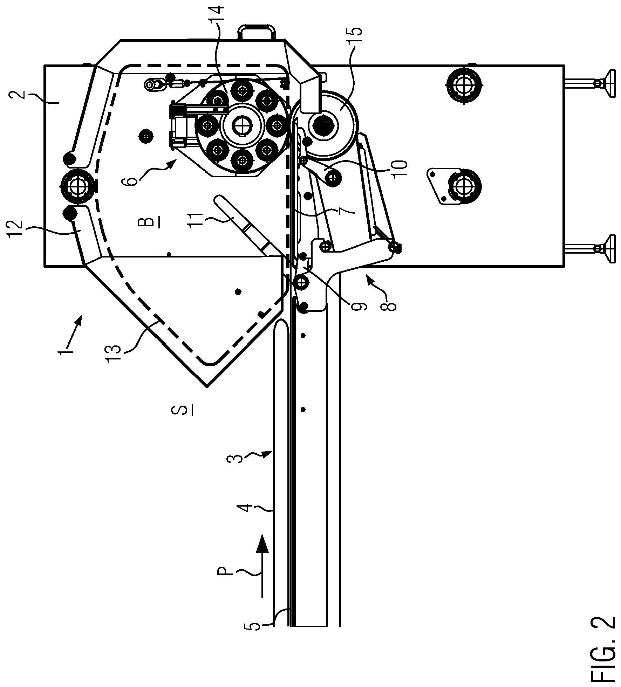

In Figur 1 ist eine Vorrichtung 1 zum Bearbeiten von Teig schematisch in einer perspektivischen Ansicht dargestellt. Die Vorrichtung 1 kann ein Gestell 2 umfassen. In der Ansicht von Figur 1 ist lediglich ein Teil des Gestells 2 dargestellt, um die übrigen Komponenten der Vorrichtung 1 besser sichtbar zu machen. Die Vorrichtung 1 kann des Weiteren eine Bandfördervorrichtung 3 umfassen. Die Bandfördervorrichtung 3 kann zum Fördern eines, vorzugsweise bandförmigen, Teigstrangs 4 (siehe Figur 2) konfiguriert sein. Insbesondere kann die Bandfördervorrichtung 3 zum Fördern des Teigstrangs 4 in einer Produktionsrichtung P (siehe Figur 2) konfiguriert sein.

Wie im gezeigten Ausführungsbeispiel kann die Bandfördervorrichtung 3 ein Förderband 5 (siehe Figur 2) aufweisen.

Die Vorrichtung 1 kann des Weiteren eine Bearbeitungsstation 6 umfassen. Die Bearbeitungsstation 6 kann zum Bearbeiten des Teigstrangs 4 konfiguriert sein. Insbesondere kann die Bearbeitungsstation 6 stromabwärts der Bandfördervorrichtung 3 angeordnet sein. Dabei kann die Bandfördervorrichtung 3 dazu konfiguriert sein, den Teigstrang 4 der Bearbeitungsstation 6 anzuliefern. Wie in den Figuren dargestellt, kann die Bearbeitungsstation 6 eine Walzvorrichtung aufweisen, die im Folgenden noch näher beschrieben werden wird.

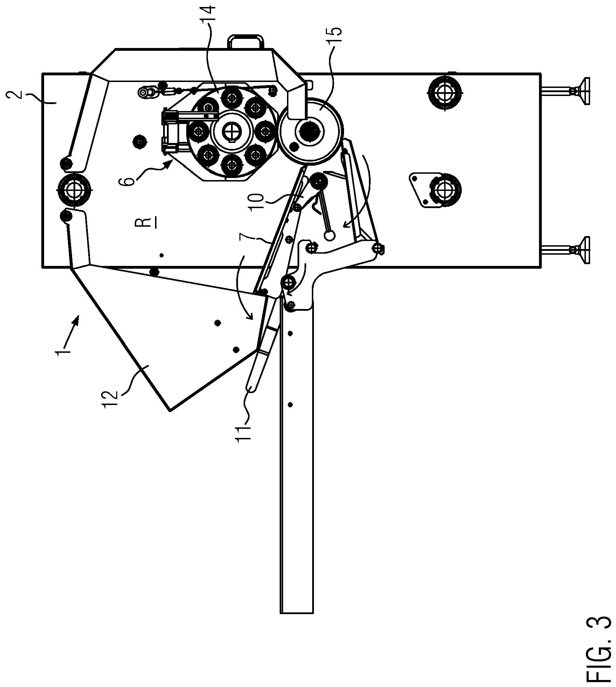

In Figur 1 ist das Förderband 5 nicht dargestellt. Dadurch ist besser zu erkennen, dass die Vorrichtung 1, wie im gezeigten Ausführungsbeispiel, einen Führungstisch 7 umfassen kann. Der Führungstisch 7 kann dazu konfiguriert sein, das Förderband 5 auf einer der Bearbeitungsstation 6 zugewandten Seite 8 der Bandfördervorrichtung 3 zu führen. Der Führungstisch 7 kann des Weiteren zwischen einer Betriebsposition B (siehe Figur 2) und einer Reinigungsposition R (siehe Figur 3) schwenkbar sein. Dazu kann der Führungstisch 7 schwenkbar an dem Gestell 2 angeordnet sein.

Wie im vorliegenden Ausführungsbeispiel, kann der Führungstisch 7 durch zwei Hebelarme 9, 10 mit dem Gestell 2 verbunden sein. Die Hebelarme 9, 10 können jeweils sowohl mit dem Gestell 2 als auch mit dem Führungstisch 7 schwenkbar verbunden sein. Die Hebelarme 9, 10 können unterschiedliche Längen aufweisen. Zur besseren Unterscheidbarkeit wird ein Hebelarm 9, der weiter entfernt von der Bearbeitungsstation angeordnet ist, im Folgenden als erster Hebelarm 9 bezeichnet. Ein Hebelarm 10, der näher an der Verarbeitungsstationen 6 angeordnet ist, wird im Folgenden als zweiter Hebelarm 10 bezeichnet. Der erste Hebelarm 9 kann eine geringere Länge aufweisen als der zweite Hebelarm 10.

Die Vorrichtung 1 kann des Weiteren einen Betätigungshebel 11 aufweisen. Der Betätigungshebel 11 kann dazu konfiguriert sein, durch seine Betätigung den Führungstisch 7 zu schwenken. Der Betätigungshebel 11 kann unbeweglich, vorzugsweise, wie im Ausführungsbeispiel gezeigt, einstückig, mit einem der Hebelarme 9, 10 verbunden sein. Insbesondere kann der Betätigungshebel 11, wie im vorliegenden Ausführungsbeispiel, mit dem ersten Hebelarm 9 unbeweglich, vorzugsweise einstückig, verbunden sein. Wie in Figur 1 zu erkennen, kann der Betätigungshebel 11 seitlich neben dem Förderband angeordnet sein.

In Figur 2 ist die Vorrichtung 1 in einer schematischen Seitenansicht dargestellt. Zusätzlich zu den bereits in Figur 1 dargestellten Komponenten ist in Figur 2 auch erkennbar, dass die Bearbeitungsstation 6 eine Schutzabdeckung 12 aufweisen kann. Die Schutzabdeckung 12 ist in Figur 2 in einer Schutzposition S dargestellt. Die Schutzabdeckung 12 kann dazu konfiguriert sein, in der Schutzposition S einen zu schützenden Bereich 13 (durch gestrichelte Linien dargestellt) abzudecken. Es ist erkennbar, dass die Schutzabdeckung 12 dazu konfiguriert sein kann, ein Herausschwenken des Führungstisches 7 aus der in Figur 2 dargestellten Betriebsposition B heraus zu blockieren, wenn die Schutzabdeckung 12 in der Schutzposition S angeordnet ist.

In Figur 2 sind außerdem weitere Komponenten zu erkennen, welche die Bearbeitungsstation 6 gemäß dem vorliegenden Ausführungsbeispiel umfassen kann. Insbesondere kann die Bearbeitungsstation 6 eine Satellitenwalzenanordnung 14 umfassen. Des Weiteren kann die Bearbeitungsstation 6 eine Gegenwalze 15 umfassen. Die Satellitenwalzenanordnung 14 und die Gegenwalze 15 können in bekannter Weise dazu konfiguriert sein, den Teigstrang 4 zu bearbeiten, insbesondere zu Walzen.

In Figur 3 ist die Vorrichtung 1 ebenfalls in einer schematischen Seitenansicht dargestellt, wobei der Führungstisch 7 in der Reinigungsposition R angeordnet ist. Dazu wurde der Betätigungshebel 11 betätigt. Die Schwenkbewegung des Führungstisches 7 kann, wie im Ausführungsbeispiel gezeigt, durch Schwenken des ersten Hebelarms 9 (in Figur 3 verdeckt) und des zweiten Hebelarms 10 erreicht werden. Der Führungstisch 7 kann dazu konfiguriert sein, eine Anordnung der Schutzabdeckung 12 in der Schutzposition S zu blockieren, wenn er in der Reinigungsposition R angeordnet ist, wie dies in Figur 3 zu erkennen ist.

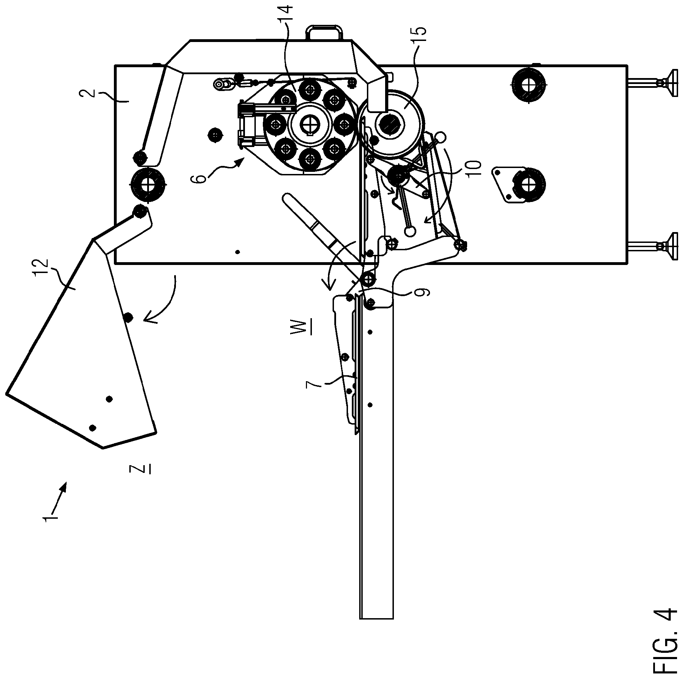

In Figur 4 ist eine Ansicht der Vorrichtung 1 aus einer ähnlichen Perspektive wie in den Figuren 2 und 3 zu sehen. In Figur 4 ist zu erkennen, dass die Schutzabdeckung 12 in einer Zugangsposition Z angeordnet werden kann. Im vorliegenden Ausführungsbeispiel kann die Schutzabdeckung 12 durch Schwenken zwischen der Zugangsposition Z und der Schutzposition S bewegt werden. Dies kann besonders vorteilhaft sein, da auch in der Zugangsposition Z eine definierte Aufbewahrung der Schutzabdeckung 12 gewährleistet sein kann. Es ist jedoch auch denkbar, dass die Schutzabdeckung 12 auf andere Weise zwischen der Zugangsposition Z und der Schutzposition S bewegbar ist. Des Weiteren ist in Figur 4 zu erkennen, dass zwischen dem Führungstisch 7 und einem der Hebelarme 9, 10, im vorliegenden Ausführungsbeispiel dem zweiten Hebelarm 10, eine lösbare Verbindung vorgesehen sein kann. Dadurch kann erreicht werden, dass der Führungstisch 7 in einer Wartungsposition W angeordnet werden kann, wie sie beispielhaft in Figur 4 dargestellt ist. Auf diese Art kann umfassenderer Zugang zu den Komponenten der Vorrichtung 1 erlaubt werden, beispielsweise um Wartungs- und/oder Reparaturarbeiten durchzuführen.

## Patentansprüche

1. Vorrichtung (1) zum Bearbeiten von Teig mit einem Gestell (2), einer Bandfördervorrichtung (3), die zum Fördern eines, vorzugsweise bandförmigen, Teigstrangs (4) konfiguriert ist, und einer Bearbeitungsstation (6), die zum Bearbeiten des Teigstrangs (4) konfiguriert und stromabwärts der Bandfördervorrichtung (3) angeordnet ist, wobei die Bandfördervorrichtung (3) einen Führungstisch (7) umfasst, der zwischen einer Betriebsposition (B) und einer Reinigungsposition (R) schwenkbar ist und dazu konfiguriert ist, ein Förderband (5) der Bandfördervorrichtung (3) auf einer der Bearbeitungsstation (6) zugewandten Seite (8) der Bandfördervorrichtung (3) zu führen,
**dadurch gekennzeichnet, dass**
der Führungstisch (7) durch zwei Hebelarme (9, 10) mit dem Gestell (2) verbunden ist, die jeweils sowohl mit dem Gestell (2) als auch mit dem Führungstisch (7) schwenkbar verbunden sind.

2. Vorrichtung nach Anspruch 1, wobei die Hebelarme (9, 10) unterschiedliche Längen aufweisen.

3. Vorrichtung nach einem der vorangehenden Ansprüche, wobei ein erster (9) der beiden Hebelarme (9, 10) weiter von der Bearbeitungsstation (6) entfernt angeordnet ist und eine geringere Länge aufweist als ein zweiter (10) der beiden Hebelarme (9, 10).

4. Vorrichtung nach einem der vorangehenden Ansprüche, wobei ein erster (9) der beiden Hebelarme (9, 10) weiter von der Bearbeitungsstation (6) entfernt angeordnet ist als ein zweiter (10) der beiden Hebelarme (9, 10) und der zweite (10) der beiden Hebelarme (9, 10) lösbar mit dem Führungstisch (7) verbunden ist.

5. Vorrichtung nach einem der vorangehenden Ansprüche, wobei die Bearbeitungsstation (6) eine Schutzabdeckung (12) aufweist, die dazu konfiguriert ist, in einer Schutzposition (S) einen zu schützenden Bereich (13) abzudecken, und wobei der Führungstisch (7) dazu konfiguriert ist, in der Reinigungsposition (R) ein Anordnen der Schutzabdeckung (12) in der Schutzposition (S) zu blockieren.

6. Vorrichtung nach einem der vorangehenden Ansprüche, wobei die Bearbeitungsstation (6) eine Schutzabdeckung (12) aufweist, die dazu konfiguriert ist, in einer Schutzposition (S) einen zu schützenden Bereich (13) abzudecken und ein Schwenken des Führungstischs (7) aus der Betriebsposition (B) heraus zu blockieren.

7. Vorrichtung nach einem der vorangehenden Ansprüche, weiterhin umfassend einen Betätigungshebel (11), der dazu konfiguriert ist, durch seine Betätigung den Führungstisch (7) zu schwenken.

8. Vorrichtung nach Anspruch 7, wobei der Betätigungshebel (11) unbeweglich, vorzugsweise einstückig, mit einem der Hebelarme (9, 10) verbunden ist.

9. Vorrichtung nach Anspruch 7 oder 8, wobei der Betätigungshebel (11) seitlich neben dem Förderband (5) angeordnet ist.

10. Vorrichtung nach einem der Ansprüche 7 bis 9, wobei der Betätigungshebel (11) dazu konfiguriert ist, in einer Ebene zu schwenken, die parallel zu einer Produktionsrichtung (P) der Vorrichtung (1) orientiert ist.

## Claims

1. An apparatus (1) for processing dough comprising a frame (2), a belt conveyor (3) configured to convey a dough strand (4), preferably being bandlike, and a processing station (6) configured to process the dough strand (4) and arranged downstream of the belt conveyor (3), wherein the belt conveyor (3) comprises a guiding table (7) pivotable between an operating position (B) and a cleaning position (R) and configured to guide a conveyor belt (5) of the belt conveyor (3) on a side (8) of the belt conveyor (3) facing the processing station (6),
**characterized in that**
the guiding table (7) is connected to the frame (2) by means of two lever arms (9, 10), each pivotably connected to both the frame (2) and the guiding table (7).

2. The apparatus according to claim 1, wherein the lever arms (9, 10) have different lengths.

3. The apparatus according to any one of the preceding claims, wherein a first one (9) of the two lever arms (9, 10) is arranged further away from the processing station (6) and has a shorter length than a second one (10) of the two lever arms (9, 10).

4. The apparatus according to any one of the preceding claims, wherein a first one (9) of the two lever arms (9, 10) is arranged further away from the processing station (6) than a second one (10) of the two lever arms (9, 10), and the second one (10) of the two lever arms (9, 10) is detachably connected to the guiding table (7).

5. The apparatus according to any one of the preceding claims, wherein the processing station (6) includes a protective cover (12) configured to cover an area (13) to be protected in a protection position (S), and wherein the guiding table (7) in the cleaning position is configured to prevent placing the protective cover (12) in the protection position (S).

6. The apparatus according to any one of the preceding claims, wherein the processing station (6) includes a protective cover (12) configured to cover an area (13) to be protected in a protection position (S) and to block pivoting of the guiding table (7) out of the operating position (B).

7. The apparatus according to any one of the preceding claims, further comprising an actuating lever (11) configured to pivot the guiding table (7) when operated.

8. The apparatus according to claim 7, wherein the actuating lever (11) is fixedly, preferably integrally, connected to one of the lever arms (9, 10).

9. The apparatus according to claims 7 or 8, wherein the actuating lever (11) is arranged lateral to the conveyor belt (5).

10. The apparatus according to any one of claims 7 to 9, wherein the actuating lever (11) is configured to pivot in a plane parallel to a production direction (P) of the apparatus (1).

## Revendications

1. Dispositif (1) pour travailler de la pâte, comprenant un châssis (2), un dispositif de bande transporteuse (3) qui est configuré pour convoyer un boudin de pâte (4), de préférence en forme de bande, et une station de travail (6) qui est configurée pour travailler le boudin de pâte (4) et agencée en aval du dispositif de bande transporteuse (3), dans lequel le dispositif de bande transporteuse (3) comprend une table de guidage (7) pouvant pivoter entre une position de fonctionnement (B) et une position de nettoyage (R) et configurée pour guider une bande transporteuse (5) du dispositif de bande transporteuse (3) sur un côté (8) du dispositif de bande transporteuse (3) faisant face à la station de travail (6),
**caractérisé en ce que** la table de guidage (7) est connectée au châssis (2) par deux bras de levier (9, 10) qui sont connectés chacun de manière pivotante à la fois au châssis (2) et à la table de guidage (7).

2. Dispositif selon la revendication 1, dans lequel les bras de levier (9, 10) présentent des longueurs différentes.

3. Dispositif selon l'une des revendications précédentes, dans lequel un premier bras de levier (9) desdits deux bras de levier (9, 10) est agencé plus loin de la station de travail (6) et présente une longueur inférieure à celle d'un deuxième bras de levier (10) desdits deux bras de levier (9, 10) .

4. Dispositif selon l'une des revendications précédentes, dans lequel un premier bras de levier (9) desdits deux bras de levier (9, 10) est agencé plus loin de la station de travail (6) qu'un deuxième bras de levier (10) desdits deux bras de levier (9, 10), et le deuxième bras de levier (10) desdits deux bras de levier (9, 10) est connecté de manière amovible à la table de guidage (7).

5. Dispositif selon l'une des revendications précédentes, dans lequel la station de travail (6) comporte un capot de protection (12) qui est configuré pour recouvrir une zone à protéger (13) dans une position de protection (S), et dans lequel la table de guidage (7) est configurée pour bloquer, en position de nettoyage (R), la mise en place du capot de protection (12) en position de protection (S).

6. Dispositif selon l'une des revendications précédentes, dans lequel la station de travail (6) comporte un capot de protection (12) qui est configuré pour recouvrir une zone à protéger (13) dans une position de protection (S) et bloquer un pivotement de la table de guidage (7) hors de la position de fonctionnement (B).

7. Dispositif selon l'une quelconque des revendications précédentes, comprenant en outre un levier d'actionnement (11) configuré de telle sorte que son actionnement fasse pivoter la table de guidage (7).

8. Dispositif selon la revendication 7, dans lequel le levier d'actionnement (11) est connecté de manière rigide à l'un des bras de levier (9, 10), de préférence d'une seule pièce.

9. Dispositif selon la revendication 7 ou 8, dans lequel le levier d'actionnement (11) est agencé latéralement à côté de la bande transporteuse (5).

10. Dispositif selon l'une des revendications 7 à 9, dans lequel le levier d'actionnement (11) est configuré pour pivoter dans un plan orienté parallèlement à une direction de production (P) du dispositif (1).
